# EUROPÄISCHE PATENTSCHRIFT

(11) **EP 1 062 124 B1**
(45) Veröffentlichungstag und Bekanntmachung des Hinweises auf die Patenterteilung: **12.12.2001**
(21) Anmeldenummer: 99939181.6
(22) Anmeldetag: 12.03.1999
(51) Int. Cl.: B60R 13/08, F01N 7/14

(54) **SCHWINGUNGSDÄMPFENDE, GERÄUSCHMINDERNDE UND WÄRMEABSCHIRMENDE FAHRZEUGVERKLEIDUNG**
VIBRATION-DAMPING, NOISE-REDUCING AND HEAT-SHIELDING VEHICLE LINING
GARNISSAGE POUR VEHICULE AMORTISSANT LES VIBRATIONS, LE BRUIT ET A EFFET CALORIFUGE

(30) Priorität: 12.03.1998 CH 59198
(43) Veröffentlichungstag der Anmeldung: 27.12.2000
(73) Patentinhaber: RIETER AUTOMOTIVE (INTERNATIONAL) AG, CH-8702 Zollikon (CH)
(72) Erfinder: ZWICK, Evelyn, CH-8123 Ebmatingen (CH)
(74) Vertreter: Ritscher, Thomas, Dr.
(86) Internationale Anmeldenummer: CH9900114
(87) Internationale Veröffentlichungsnummer: WO9946147

(56) Entgegenhaltungen:
- EP-A- 0 881 423
- DE-A- 3 821 468
- DE-A- 4 137 706
- DE-U- 9 107 484
- DE-U- 9 202 228
- FR-A- 2 694 961
- US-A- 5 464 952

## Beschreibung

Die vorliegende Erfindung betrifft eine schwingungsdämpfende und wärmeabschirmende Fahrzeugverkleidung gemäss Oberbegriff des Anspruchs 1, sowie ein dafür geeignetes Hitzeschild gemäss Oberbegriff des Anspruchs 4, und ein dafür geeignetes Karosserieteil gemäss Oberbegriff des Anspruchs 8.

Es ist das Bestreben der Automobilindustrie, raumsparende und akustisch wirksame Verkleidungen zu verwenden, um damit nicht nur den Komfort im Fahrgastraum erhöhen zu können, sondern gleichzeitig auch den Geräuschpegel im Fahrgastraum und die Lärmabstrahlung nach aussen reduzieren zu können. Insbesondere, besteht ein grosses Interesse an Massnahmen zur wirksamen Reduktion der unter anderem von Motor-, Auspuff- oder Reifengeräuschen erzeugten Lärmbelaetung im Fahrzeuginnern.

So ist bspw. aus der EP-A 0 253 376 ein adhäsives Isolationssystem bekannt, bei welchem auf den Untergrund ein erster Belag aufgebracht ist, welcher eine als akustisches Masse-Feder-System wirkende mehrschichtige Isolationsschicht trägt. Auf diese Isolationsschicht bzw. deren Schwerschicht ist eine aus weichelastischem, überwiegend offenporigem Material bestehende Entkopplerschicht aufgebracht, auf welcher wiederum eine aus Laufschicht und Unterschicht bestehende Teppichlage befestigt ist.

Darüberhinaus kommt der Verwendung von schallabsorbierenden Hitzeschilden eine besondere Bedeutung zu. Diese werden zwischen sich stark erhitzenden Fahrzeugteilen, bspw. Katalysatoren und/oder Auspuffrohren, und dem Fahrzeugboden angebracht und reflektieren die von den Katalysatoren und/oder Auspuffrohren abgestrahlte Wärme respektive isolieren den Bodenteil von diesen heissen Fahrzeugteilen.

Bisher bekannte Hitzeschilde bestehen deshalb im wesentlichen aus einem dickeren Blechformteil mit hohem Wärmereflektionsvermögen, vorzugsweise aus Aluminium, auf welchem eine mit einer Schutzfolie versehene wärmeabsorbierende Isolierschicht aufgebracht ist. Die dabei verwendete Isolierschicht besteht in der Regel aus Keramik-, Stein- oder Glaswolle resp. Schäumen oder Folienpaketen. Derartige Hitzschilde sind bspw. in der DE-U-87 00 919.6 oder EP-0 439 432 beschrieben.

Ein bekanntes Hitzeschild mit schallabsorbierender Wirkung wird bspw. im Gebrauchsmuster DE-U-9107484.3 beschrieben. Dieses Hitzeschild weist ein Trägerblech aus Aluminium auf und umfasst eine Isolierschicht aus einem Maschenwerk aus Aluminiumfäden. Zusätzliche Schichten innerhalb der Isolierschicht können aus einer nach Art von Streckmetall gelochten Folie bestehen und sind in geeigneter Weise mit einer Wellung plissiert.

Solche Hitzeschilde werden heute genutzt, um den Geräuschpegel der Fahrzeuge zu reduzieren. Dazu wird das Trägerblech der Hitzeschilde mindestens teilweise perforiert und wird das Isolationspaket offenporig gestaltet, um gleichzeitig schallabsorbierend wirken zu können.

Diese Hitzeschilde werden derart montiert, dass die aufgenommene Wärme von der zwischen Schild und Bodenblech vorbeistreichenden Luft abgeführt werden kann, d.h. sind vom Bodenblech beabstandet. Diese Anordnungen sind selbsttragend und machen einen äusserst stabilen Aufbau erforderlich, um den bei Fahrzeugen auftretenden starken Vibrationen standhalten zu können. Darüberhinaus ist die Montage dieser Hitzeschilde relativ aufwendig. Ein derartiges Hitzeschild ist bspw. in der gattungsgemäßen US-5464952 beschrieben.

Es ist generell das Bestreben der heutigen Automobilindustrie Verkleidungen zu schaffen, die bei mindestens gleichbleibender technischer Funktionsfähigkeit leichter und kostengünstiger sind als die bestehenden Verkleidungen.

Es ist deshalb Aufgabe der vorliegenden Erfindung eine Fahrzeugverkleidung zu schaffen, welche die gewünschten Funktionsfähigkeiten der bekannten Innen- und Aussenverkleidungen bei Fahrzeugen aufweist, jedoch leichter, raumsparender und kostengünstiger ist.

Insbesondere soll eine Fahrzeugverkleidung geschaffen werden, die vibrationsdämpfend, wärmeabschirmend und schallisolierend wirkt und dabei leichter, raumsparender und kostengünstiger ist, als konventionelle Bauteile.

Diese Aufgabe wird erfindungsgemäss durch eine Fahrzeugverkleidung mit den Merkmalen des Anspruchs 1, sowie ein Hitzeschild mit den Merkmalen des Anspruchs 4 und ein Karosserieteil mit den Merkmalen des Anspruchs 8 gelöst, und insbesondere durch eine schwingungsdämpfende und wärmeabechirmende Fahrzeugverkleidung, bei welcher ein verspannbares Trägerblech des Hitzeschildes gegen die Unterseite eines gewölbten Karosserieteils gespannt ist. Dabei kann das Isolationspaket des Hitzeschildes als Feder zwischen Karosserieteil und Trägerblech wirken.

Die erfindungsgemässe Fahrzeugverkleidung findet ihre Verwendung im wesentlichen bei gewölbten Karosserieteilen, insbesondere im Fahrzeugbodentunnel, und weist einen akustisch wirksamen Hitzeschild auf. Dieser Hitzeschild ist erfindungsgemäss gegen das Karosserieteil gespannt, derart, dass die Vibrationen des Karosserieteils durch diesen Hitzeschild gedämpft werden. Dieser Hitzeschild weist in einer bevorzugten Ausführungsform eine 0.5 mm dicke Trägerschicht aus Aluminium auf, ein 9 mm dickes, federelastisches Isolationspaket bekannter Art, bspw. aus NOMEX® , und eine dünne Deckfolie, insbesondere eine 0.05 mm dünne Aluminiumfolie. Dieser Hitzeschild wird vorzugsweise mit Klemmen oder Klemmschienen am Karosserieteil befestigt, kann aber auch mit anderen gebräuchlichen Befestigungsmitteln, bspw, durch Schrauben oder Klammern, fixiert werden. Durch diese Befestigung wird das Trägerblech mit dem Karosserieteil elastisch verspannt. Damit wirkt das federelastische Isolationspaket zwischen dem Trägerblech und dem Karosserieteil vibrationsdämpfend, sowohl auf das Karosserieteil als auch auf das Trägerblech. In einer bevorzugten Ausführungsform wird das 9 mm dicke Isolationspaket auf 6 mm komprimiert. Die Verwendung eines derart aufgespannten Hitzeschildes erlaubt es, bei der Innenverkleidung auf die üblicherweise verwendete bituminöse Schwerschicht zu verzichten, respektive diese in erheblichem Masse zu reduzieren.

Die Vorteile der erfindungsgemässen Fahrzeugverkleidung sind für den Fachmann unmittelbar ersichtlich. Insbesondere führt die direkte Montage des Schall- und Wärmeisolationspaketes (Hitzeschild) zu einer Vibrationsdämpfung, welche es erlaubt, auf die vibrationsdämpfende Schwerschicht der Verkleidung im Fahrzeuginnern mindestens teilweise zu verzichten und damit das Gewicht dieser Fahrzeuginnenverkleidung erheblich zu reduzieren. Der mindestens teilweise Verzicht auf eine vibrationedämpfende Schwerschicht bei der Fahrzeuginnenverkleidung führt darüberhinaus zu einem raumsparenden, d.h. dünneren Aufbau derselben bei mindestens gleichbleibender akustischer Wirksamkeit.

Darüberhinaus erlaubt die erfindungsgemässe Montage des Hitzeschildes am Karoaserieteil, auf die Deckfolie des Hitzeschildes vollständig zu verzichten und damit weiteres Gewicht einzusparen. Eine weitere Kosteneinsparung kann durch den Wegfall von besonderen Befestigungselementen, insbesondere Abstandshaltern und die einfachere und deshalb auch raschere Montage erzielt werden. Insbesondere kann das Trägerblech des Hitzeschildes dünner gewählt werden, da dieses keine selbsttragenden Funktionen mehr erfüllen muss und die vibrationsbedingten Verschleisserscheinungen durch das federelastische Isolationspaket aufgefangen werden. Dieser federelastische Aufbau führt damit gleichzeitig auch zu einer längeren Lebensdauer des gesamten Hitzeschildes. Durch die direkte Montage des Hitzeschildes auf der Unterseite des Bodenblechs wird zusätzlich die Distanz zwischen Hitzeschild und Wärmequelle vergrössert, was dazu führt, dass das Hitzeschild mit einer geringeren Wärmestrahlung belastet wird. Darüberhinaus kann durch die Verwendung eines mehr oder weniger perforierten Trägerbleches die Schallabsorption respektive Schallisolation in einfacher Weise optimiert werden.

Bevorzugte Weiterbildungen der erfindungsgemässen Fahrzeugverkleidung, respektive deren Hitzeschildes und dazugehöriger Karosserieteile, weisen die Merkmale der dazugehörigen Unteransprüche auf.

Im folgenden soll die Erfindung anhand eines Ausführungsbeispiels und mit Hilfe der Figuren näher beschrieben werden. Es zeigt:

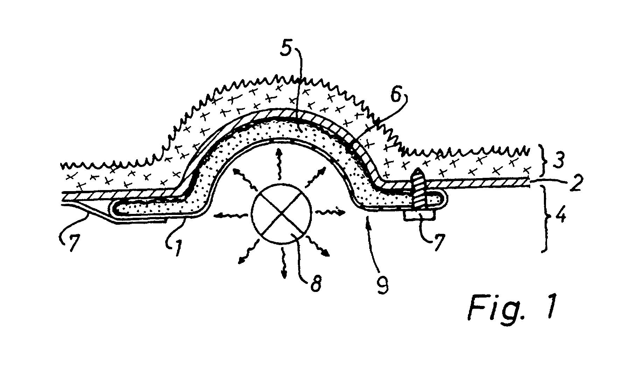

- Fig. 1: den schematischen Aufbau einer erfindungsgemässen Fahrzeugverkleidung.

Der in Figur 1 dargestellte Verkleidungsaufbau eines Fahrzeugbodens umfasst ein gewölbtes Ffarosserieteil 2 mit einer Innenverkleidung 3 und einer ein Hitzeschild 9 aufweisenden Aussenverkleidung 4. Dieses Hitzeschild 9 liegt erfindungsgemäss am Karosserieteil 2 an, derart, dass die Vibrationen des Karosserieteils 2 durch dieses Hitzeschild 9 gedämpft werden. Dazu ist das Hitzeschild 9 federnd in das gewölbte Karosserieteil 2 eingespannt und mit diesem federelastisch gekoppelt. Der mit diesem Hitzeschild 9 auf das Karosserieteil 2 erzeugte Druck wirkt vibrationsdämpfend. Auf die in der Regel fahrgastraumseitig angebrachten vibrationsdämpfenden Schwerschichten kann somit mindestens teilweise verzichtet werden.

In einer bevorzugten Aueführungsform ist die erfindungsgemässe Aussenverkleidung 4 im Bereich eines gewölbten Karosserieteils 2 angebracht. Derartig gewölbte Karosserieteile 2 sind in der Regel im Bodenblech der Fahrzeuge eingebracht und können beliebig gestaltet, insbesondere gerundet oder kantig sein. Es versteht sich, dass diese Karosserieteile 2 aus metallischen oder anderen modernen Werkstoffen hergestellt sind. Die erfindungsgemäss in die runde oder eckige Wölbung des Karosserieteils eingespannten Hitzeschilde 9 umfassen in wesentlichen ein Trägerblech 1 und ein federelastisches Isolationspaket 5. Erfindungsgemäss wird dieses Trägerblech 1 mit dem Karosserieteil 2 derart verbunden, dass das federelastische Isolationspaket 5 gegen das Karosserieteil 2 gepresst wird. Dieses federelastische Isolationspaket kann somit als Feder zwischen dem Karosserieteil 2 und dem Trägerblech 1 wirken. Als Isolationspakete eignen sich alle im Automobilbereich bekannten wärme- und schallisolierenden Isolationen. Diese bestehen bevorzugterweise aus einer Vielzahl übereinander gestapelter, perforierter und genoppter Aluminiumfolien, können für die vorliegende Erfindung jedoch auch aus elastischen und porösen Schäumen oder Faservliesen bestehen. Dazu geeignete Schäume oder Faservliese sind dem Fachmann hinlänglich bekannt. Dieser wird aus diesen Isolationspaketen 5 eines wählen, welches für seine Zwecke optimale schwingungsdämpfende und wärmeabschirmende Eigenschaften aufweist. Es versteht sich, dass der Fachmann auch bei der Wahl des Trägerblechs 1 auf dessen Elastizität respektive Steifigkeit achtet. Bevorzugte Trägerbleche 1 und Isolationspakete 5 sind aus Aluminium gefertigt, können jedoch auch aus verstärkten Kunststoffen oder anderen rezyklierbaren Materialien bestehen. Akustisch wirksame Hitzeschilde weisen in der Regel ein mindestens partiell gelochtes Trägerblech 1 auf. Der Fachmann wird die Anordnung und Dimensionierung der Perforationen den akustischen Anforderungen anpassen.

Um das Trägerblech 1 in gewünschter Weise mit dem Karosserieteil 2, insbesondere dem Bodenblech verspannen zu können, sind geeignete Befestigungsmittel 7 vorgesehen. Derartige Befestigungsmittel 7 sind dem Fachmann ebenfalls hinlänglich bekannt. Als besonders geeignet erweisen sich Schrauben, Klemmen und/oder Klemmschienen. Diese Befestigungsmittel 7 erlauben es, das Trägerblech 1 derart mit dem gewölbten Karosserieteil 2 zu verspannen, dass das federelastische Isolationspaket 5 zwischen dem Trägerblech 1 und dem Karosserieteil 2 leicht komprimiert wird und damit das Karoseerieteil 2 und das Trägerblech 1 koppelt. Es versteht sich, dass das Trägerblech 1 und/oder das Karosserieteil 2 derart geformt sein kann, dass das Trägerblech 1 ohne zusätzliche Befestigungamittel 7 in die Wölbung des Karosserieteils 2 eingeklemmt resp. eingespannt werden kann.

Das dargestellte Hitzeschild 9 weist in dieser Ausführungsform ein 0.5 mm dünnes Trägerblech 1 aus Aluminium auf, ein 9 mm dickes Isolationapaket 5 bekannter Art, bspw. aus NOMEX® (Aramidfasern), und eine 0.05 mm dünne Deckfolie 6 aus Aluminium. Es versteht sich, dass diese Deckfolie 6 ebenfalls mit Perforationen versehen sein kann, respektive auf dieser Deckfolie 6 verzichtet werden kann. In einer bevorzugten Ausführungsform wird dieses Hitzeschild 9 mit Klemmschienen 7 gegen das Karosserieteil 2 gespannt. Durch diese Verspannung wird das ca. 9 mm dicke, federelastische Isolationspaket 5 auf ca. 6 mm komprimiert.

Die Absorptionsfähigkeit eines solchen schall- und hitzeabweisenden Verkleidungsaufbaus kann erheblich verbessert werden, wenn statt eines normalen Trägerblechs 1 ein mindestens teilweise perforiertes Blech verwendet wird. Eine solche Perforation erlaubt den Schallwellen in das Isolationspaket 5 einzudringen und führt zu einer erhöhten Schallabsorption, durch welche die nach aussen abgestrahlten Geräusche erheblich reduziert werden. Demgegenüber wirkt ein nicht perforiertes Trägerblech 1 als Schallsperrschicht, welche die auftreffenden Schallwellen im wesentlichen wieder reflektiert. Damit kann die Isolationswirkung für den Fahrzeuginnenraum verbessert werden. Es versteht sich, dass der Fachmann durch eine gezielte Anordung und Dimensionierung der Perforationen und/oder Spannkräfte akustische Wirksamkeit der erfindungsgemässen Verkleidung optimieren kann.

Ein wesentlicher Vorteil dieses erfindungsgemässen Aufbaus liegt in der Vibrationsdämpfung des Bodenblechs 2. Diese vibrationsdämpfende Wirkung erlaubt es, die Dämpfungsmassnahmen im Innern des Fahrzeugs in erheblichem Mass zu reduzieren, d.h. insbesondere auf die Verwendung von Schwerschichten im Innern der Fahrzeuge verzichten zu können und damit das Gesamtgewicht der Innenverkleidung 3 massgeblich zu verringern - ohne die schallisolierenden Eigenschaften des Fahrzeugbodens zu beeinträchtigen.

Bei einer bevorzugten Anwendung wird das Hitzeschild 9 im Bereich des Karosserietunnels eingespannt, und/oder zusätzlich mit zwei oder vier Klemmen fixiert. Die Federwirkung des Isolationspakets 5 unterstützt die Befestigung des Hitzeschildes 9. Der erfindungsgemässe Aufbau erlaubt also eine äusserst einfache Montage des erfindungsgemässen Hitzeschildes, auch in schwerzugänglichen Bereichen. In der einfachsten Ausführungsform der erfindungsgemässen Verkleidung wird auf die Innenverkleidung 3 vollständig verzichtet.

## Patentansprüche

1. Schwingungsdämpfende und wärmeabschirmende Fahrzeugverkleidung (3,4) im Bereich eines gewölbten Karosserieteils (2), welche Fahrzeugverkleidung (3,4) eine Aussenverkleidung (4) aufweist, welche als ein in das gewölbte Karosserieteil (2) eingespanntes Hitzeschild (9) mit mindestens einem Trägerblech (1) ausgebildet ist, welches Hitzeschild (9) ein federelastisches Isolationspaket (5) aufweist, **dadurch gekennzeichnet, dass** das Trägerblech (1) derart mit dem gewölbten Karosserieteil (2) verspannt ist, dass das federelastische Isolationspaket (5) zwischen dem Trägerblech (1) und dem Karosserieteil (2) komprimiert wird und damit das Karoseerieteil (2) und das Trägerblech (1) koppelt.

2. Fahrzeugverkleidung nach Anspruch 1, **dadurch gekennzeichnet, dass** das Hitzeschild (9) mindestens teilweise perforiert ist.

3. Fahrzeugverkleidung nach einem der Ansprüche 1 oder 2, **dadurch gekennzeichnet, dass** Mittel (7) vorgesehen sind, um das Trägerblech (1) des Hitzeschildes (9) in das gewölbte Karosserieteil (2) zu spannen.

4. Hitzeschild (9) für eine Fahrzeugverkleidung (3,4) gemäss Anspruch 1, **dadurch gekennzeichnet, dass** dieses ein verspannbares Trägerblech (1) und ein federelastisches Isolationspaket (5) aufweist.

5. Hitzeschild (9) nach Anspruch 4, **dadurch gekennzeichnet, dass** dieses mindestens partiell perforiert ist.

6. Hitzeschild (9) nach einem der Ansprüche 4 oder 5, **dadurch gekennzeichnet, dass** das federelaatieche Isolationspaket (5) schallabsorbierend wirksam ist.

7. Hitzeschild (9) nach einem der Ansprüche 4 bis 6, **dadurch gekennzeichnet, dass** dieses Mittel (7) aufweist, um das verspannbare Trägerblech (1) mit einem Karosserieteil (2) zu verspannen.

8. Karosserieteil für eine Fahrzeugverkleidung (3,4) gemäss Anspruch 1, **dadurch gekennzeichnet, dass** dieses mindestens teilweise gewölbt ist und Mittel aufweist, um ein Hitzeschild gemäss Anspruch 4 gegen das Karosserieteil (2) zu verspannen.

9. Karosserieteil nach Anspruch 8, **dadurch gekennzeichnet, dass** die Mittel zum Verspannen des Hitzeschildes (9) einzelne Klemmen und/oder Klemmschienen (7) umfassen.

## Claims

1. Vibration-damping, heat-shielding vehicle trim (3, 4) in the area of an arched car body part (2), said vehicle trim (3, 4) comprising an external trim (4), having the form of a heat shield (9) with at least one backing sheet (1) clamped in the arched car body part (2), which heat shield (9) comprises a resilient insulating assembly (5), **characterised in that** the backing sheet (1) is clamped to the arched car body part (2) in such a way that the resilient insulating assembly (5) is compressed between the backing sheet (1) and the car body part (2) and thus couples the car body part (2) and the backing sheet (1).

2. Vehicle trim according to claim 1, **characterised in that** the heat shield (9) is at least partially perforated.

3. Vehicle trim according to one of claims 1 or 2, **characterised in that** means (7) are provided for clamping the backing sheet (1) of the heat shield (9) into the arched car body part (2).

4. Heat shield (9) for vehicle trim (3, 4) according to claim 1, **characterised in that** it comprises a clampable backing sheet (1) and a resilient insulating assembly (5).

5. Heat shield (9) according to claim 4, **characterised in that** it is at least partially perforated.

6. Heat shield (9) according to one of claims 4 or 5, **characterised in that** the resilient insulating assembly (5) has a sound-absorbing effect.

7. Heat shield (9) according to one of claims 4 to 6, **characterised in that** it comprises means (7) for clamping the clampable backing sheet (1) to a car body part (2).

8. Car body part for vehicle trim (3, 4) according to claim 1, **characterised in that** it is at least partially arched and comprises means for clamping a heat shield according to claim 4 against the car body part (2).

9. Car body part according to claim 8, **characterised in that** the means for clamping the heat shield (9) comprise individual clamps and/or clamping bars (7).

## Revendications

1. Garniture pour véhicules amortissant les vibrations et à écran calorifuge (3, 4) dans la région d'une partie bombée de la carrosserie (2), la garniture pour véhicules (3, 4) comportant un revêtement externe (4) ayant la forme d'un écran thermique (9) encastré dans la partie bombée de la carrosserie (9), avec au moins une tôle de support (1), l'écran thermique (9) comportant un paquet isolant élastique (5), **caractérisée en ce que** la tôle de support (1) est fixée par calage sur la partie bombée de la carrosserie (2) de sorte que le paquet isolant élastique (5) est comprimé entre la tôle de support (1) et la partie de la carrosserie (2), accouplant ainsi la partie de la carrosserie (2) et la tôle de support (1).

2. Garniture de carrosserie selon la revendication 1, **caractérisée en ce que** l'écran thermique (9) est au moins partiellement perforé.

3. Garniture de carrosserie selon l'une des revendications 1 ou 2, **caractérisée en ce qu'**elle comporte des moyens (7) destinés à fixer par calage la tôle de support (1) de l'écran thermique (9) dans la partie bombée de la carrosserie (2).

4. Ecran thermique (9) pour une garniture de véhicule (3, 4) selon la revendication 1, **caractérisé en ce qu'**il comporte une tôle de support à calage (1) et un paquet isolant élastique (5).

5. Ecran thermique (5) selon la revendication 4, **caractérisé en ce qu'**il est au moins partiellement perforé.

6. Ecran thermique (9) selon l'une des revendications 4 ou 5, **caractérisé en ce que** le paquet isolant élastique (5) a une fonction d'absorption acoustique.

7. Ecran thermique (9) selon l'une des revendications 4 à 6, **caractérisé en ce qu'**il comporte des moyens (7) destinés à fixer par calage la tôle de support à calage (1) à une partie de la carrosserie (2).

8. Partie de carrosserie pour une garniture de véhicule (3, 4) selon la revendication 1, **caractérisée en ce qu'**elle est au moins partiellement bombée et comporte des moyens destinés à caler un écran thermique selon la revendication 4 contre la partie de la carrosserie (2).

9. Partie de carrosserie selon la revendication 8, **caractérisée en ce que** les moyens servant au calage de l'écran thermique (9) englobent différentes pinces et/ou différents rails de serrage (7).
